# FASCICULE DE BREVET EUROPEEN

(11) **EP 2 175 183 B1**
(45) Date de publication et mention de la délivrance du brevet: **25.03.2015**
(21) Numéro de dépôt: 09172545.7
(22) Date de dépôt: 08.10.2009
(51) Int. Cl.: F16L 5/02, F16L 5/10, B60R 16/02, B64D 37/00

(54) **Dispositif de maintien étanche d'une conduite, procédé de montage étanche d'une conduite à travers une cloison et utilisation d'un tel dispositif pour la traversée étanche d'une cloison d'un réservoir d'aéronef**
Vorrichtung zum Dichthalten einer Leitung, dichtes Montageverfahren einer Leitung durch eine Trennwand, und Verwendung einer solchen Vorrichtung für die dichte Durchführung in einer Trennwand eines Flugzeugtanks
Leaktight support device for a conduit, method for leaktight installation of a conduit through a bulkhead and use of such a device for leaktight lead-through in a bulkhead of an aircraft tank

(30) Priorité: 13.10.2008 FR 0856921
(43) Date de publication de la demande: 14.04.2010
(73) Titulaire: Amphenol Air LB, 08110 Blagny (FR)
(72) Inventeur: Cayzac, Gaspard, 08370, MARGUT (FR)
(74) Mandataire: Delprat, Olivier

(56) Documents cités:
- EP-A- 1 026 044
- WO-A-89/09900
- FR-A- 2 703 753
- FR-A- 2 813 370
- US-A1- 2008 116 319

## Description

L'invention concerne, de manière générale, les dispositifs d'étanchéité et se rapporte, plus particulièrement, au montage étanche d'une conduite à travers une cloison. Un tel dispositif est connu, par exemple, par le document FR-A-2 703 753.

Une application particulièrement intéressante de l'invention concerne la traversée étanche d'une conduite d'alimentation traversant la paroi d'un réservoir de carburant pour aéronef, et en particulier un réservoir de kérosène pour avion.

Comme on le conçoit, l'introduction d'une conduite à travers une cloison nécessite de pratiquer un orifice dans la cloison et implique généralement l'utilisation d'un joint d'étanchéité inséré dans l'orifice. Classiquement, le joint est réalisé en matériau élastiquement déformable et comporte un passage axial dans lequel est introduite la conduite et une gorge périphérique annulaire dans laquelle vient s'insérer le bord de l'orifice pratiqué dans la cloison.

L'orifice est calibré de manière à assurer une étanchéité suffisante entre la conduite et le joint. Tel est également le cas de la gorge annulaire qui coopère avec la cloison.

L'ensemble assure, d'une part, l'étanchéité de l'assemblage et, d'autre part, le maintien de la conduite.

Toutefois, lorsque l'ensemble est destiné à être utilisé dans un environnement dans lequel les contraintes mécaniques sont relativement élevées, des sollicitations exercées sur la conduite tendent à provoquer une déformation du joint qui, dès lors, n'est plus en mesure d'assurer efficacement la fonction d'étanchéité requise et peut, dans certains cas extrêmes, se dégager de l'orifice.

Une telle situation est inacceptable dans des applications pour lesquelles la fonction de maintien de la conduite et la fonction d'étanchéité doivent être assurées efficacement même en cas de sollicitations mécaniques sévères.

Tel est en particulier le cas dans le domaine de l'aviation, notamment pour la traversée étanche d'une cloison d'un réservoir de kérosène.

Le but de l'invention est donc de pallier les inconvénients liés à l'utilisation des dispositifs d'étanchéité conventionnels et de proposer un dispositif pour la traversée étanche d'une cloison par une conduite, capable d'assurer le maintien de la conduite et l'étanchéité de l'assemblage même en cas de fortes sollicitations mécaniques.

L'invention a donc pour objet, selon un premier aspect, un dispositif de maintien étanche d'une conduite pour la traversée étanche d'une cloison par la conduite, comprenant un corps muni d'un passage axial étanche pour la conduite et d'une zone périphérique de montage étanche du dispositif dans un orifice pratiqué dans la cloison.

Le corps du dispositif est formé en une seule pièce par surmolage et comprend un ensemble de secteurs rigides de maintien comportant chacun un patin d'appui comprenant une surface d'appui apte à reposer à plat contre la surface périphérique externe de la conduite et un matériau d'étanchéité disposé entre les secteurs pour délimiter ledit passage étanche et autour desdits secteurs dans ladite zone périphérique du corps par laquelle il vient se monter sur la cloison.

Ainsi, grâce à l'utilisation des secteurs rigides, on assure un maintien efficace de la conduite dans une position prédéterminée fixe, et l'on procure au dispositif une rigidité suffisante pour éviter des déformations sensibles du dispositif qui seraient susceptibles d'altérer sa forme générale et donc l'étanchéité de l'assemblage.

En outre, grâce à l'utilisation du matériau d'étanchéité disposé entre les secteurs et autour de ces derniers, on assure une étanchéité tant entre le dispositif et la conduite qu'entre le dispositif et la cloison.

Selon une autre caractéristique de l'invention, les secteurs sont déplaçables de manière radialement externe lors de l'insertion de la conduite à travers le passage étanche, de manière à solliciter la zone périphérique du corps contre la cloison, à l'encontre d'un effort exercé par le matériau d'étanchéité sollicitant les patins en appui contre la conduite.

Dans un mode de réalisation, le corps comprend une âme en matériau rigide comportant une embase à partir de laquelle s'étendent lesdits secteurs.

Par exemple, chaque secteur comprend une gorge radiale externe emplie dudit matériau d'étanchéité, à l'endroit de ladite zone périphérique du corps par laquelle il vient se monter sur la cloison.

Avantageusement, le matériau d'étanchéité comprend un ensemble de nervures coaxiales et parallèles s'étendant en saillie dans le passage étanche.

En ce qui concerne les patins d'appui, ceux-ci s'étendent de préférence en saillie radiale dans le passage.

Par exemple, le dispositif comporte quatre secteurs de maintien. Dans un mode de réalisation, les secteurs rigides sont réalisés en matériau composite.

Le matériau d'étanchéité, quant à lui, comprend par exemple du silicone.

L'invention a également pour objet, selon un deuxième aspect, un procédé de montage étanche d'une conduite à travers une cloison au moyen d'un dispositif de maintien étanche tel que défini ci-dessus.

Ce procédé comprend les étapes de :
- insertion du dispositif dans un orifice pratiqué dans la cloison ; et
- introduction de la conduite dans le passage étanche du corps de manière à solliciter, d'une part, les secteurs et le matériau d'étanchéité entourant les secteurs contre la cloison et, d'autre part, les patins d'appui contre la conduite.

L'invention a encore pour objet, selon un troisième aspect, l'utilisation d'un dispositif de maintien tel que défini ci-dessus pour la traversée étanche d'une cloison d'un réservoir d'un aéronef.

D'autres buts, caractéristiques et avantages de l'invention apparaîtront à la lecture de la description suivante, donnée uniquement à titre d'exemple non limitatif, et faite en référence aux dessins annexés, sur lesquels :
- les figures 1 et 2 sont des vues en perspective d'un dispositif selon l'invention ;
- les figures 3 et 4 sont deux vues de profil du dispositif des figures 1 et 2, dans deux orientations différentes;
- la figure 5 est une vue de dessus du dispositif des figures 1 à 4 ;
- les figures 6 et 7 sont des vues en coupe, respectivement selon les lignes VI-VI et VII-VII du dispositif de la figure 5 ;
- la figure 8 est une vue de dessus du dispositif montrant son montage sur une cloison ;
- les figures 9 et 10 sont des vues de profil du dispositif de la figure 8, dans des orientations respectives ;
- les figures 11 et 12 sont des vues en coupe selon les lignes XI-XI et XII-XII, respectivement, du dispositif de la figure 8 ;
- les figures 13 à 16 montrent le dispositif après montage dans un orifice pratiqué dans la cloison ; et
- les figures 17 à 22 montrent le dispositif de la figure 1, après son montage dans l'orifice pratiqué dans la cloison, et après introduction de la conduite.

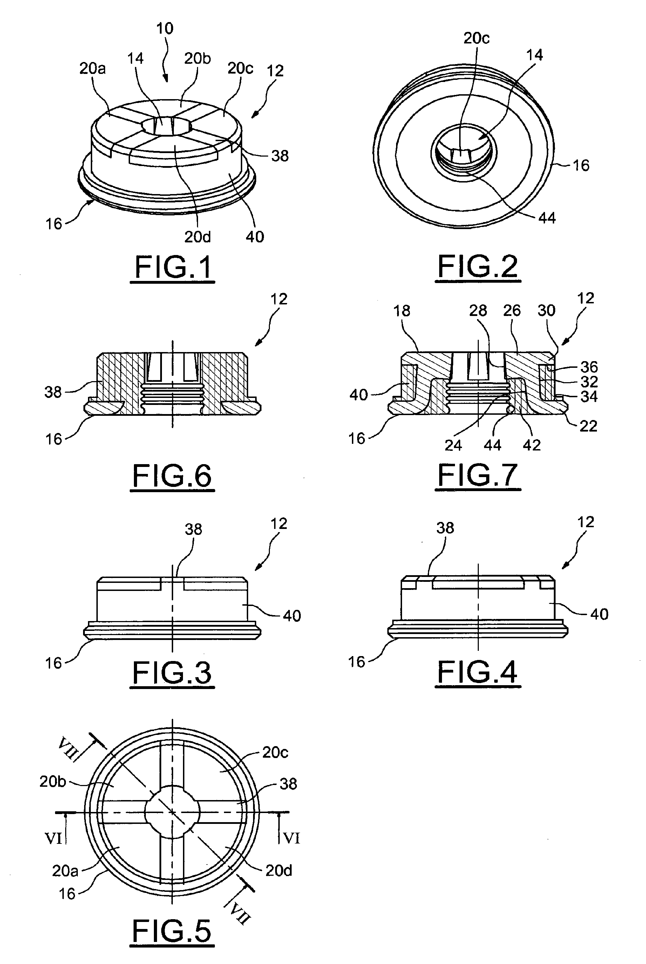

Sur les figures 1 à 4, on a représenté un dispositif de maintien étanche d'une conduite conforme à l'invention, désignée par la référence numérique générale 10.

Dans l'application envisagée, ce dispositif est destiné à assurer le maintien et l'étanchéité d'une conduite d'alimentation traversant une cloison d'un réservoir de kérosène embarqué à bord d'un avion.

Toutefois, on ne sort pas du cadre de l'invention lorsque le dispositif est destiné au montage étanche d'une conduite ou canalisation à travers d'autres types de cloison.

Comme on le voit, le dispositif 10 a une forme globalement annulaire, ici de section transversale ronde.

I1 comporte essentiellement un corps 12 pourvu d'un passage axial 14 pour le passage étanche de la conduite et d'une collerette annulaire 16. En considérant le sens d'introduction de la conduite dans le passage 14, le corps 12 comporte une extrémité proximale tournée du côté de la collerette 16 et une extrémité distale opposée, de forme plane.

Comme cela sera décrit en détail par la suite, le corps 12 est destiné à être introduit dans un orifice de forme correspondante pratiqué dans la cloison, en appui étanche contre cette dernière par la collerette annulaire 16.

Le corps 12 comporte une âme 18 en matériau rigide assurant le maintien de la conduite et conférant au corps une rigidité suffisante pour lui permettre d'être soumis à des sollicitations mécaniques sans engendrer de déformation majeure du dispositif.

Par exemple, l'âme 18 est réalisée en matériau composite.

L'âme 18 comporte un ensemble de secteurs de maintien 20-a, 20-b, 20-c, 20-d, ici au nombre de quatre, angulairement répartis au sein du corps 12.

Chaque secteur s'étend à partir d'une embase annulaire 22 commune formant la collerette 16, et comporte une branche 24 comportant une première extrémité proximale s'étendant à partir de l'embase 22 et une extrémité distale pourvue d'un patin d'appui 26.

Chaque patin 26 comporte, intérieurement, une surface d'appui 28 pour la conduite, tournée vers le passage 14 et en saillie dans ce dernier et, extérieurement, un épaulement annulaire 30 qui délimite, avec la surface périphérique externe 32 de la branche 24 et avec une surface radiale 34 de l'embase 22, une gorge périphérique 36.

Comme on le voit sur les figures 6 et 7, les patins d'appui et, en particulier, les surfaces d'appui 28, sont disposées deux à deux en regard l'une de l'autre de manière à former une portion distale du passage 14.

On concevra ainsi les secteurs de maintien de sorte que le passage délimité par les surfaces d'appui 28 corresponde sensiblement au diamètre externe de la conduite.

Toutefois le diamètre du passage délimité par le patin au niveau de la base des patins est légèrement supérieur à celui de la conduite, tandis que le diamètre de ce passage au niveau de l'extrémité distale des patins est légèrement inférieur à celui de la conduite.

Ainsi, et bien que l'âme 18 soit réalisée en matériau rigide, grâce à la disposition en porte-à-faux des surfaces d'appui 28 par rapport à l'embase 22, et en particulier grâce à la présence des branches 24, lors de l'introduction de la conduite, les secteurs de maintien 20a, 20b, 20c, 20d sont susceptibles de se déplacer radialement vers l'extérieur, par déformation des branches 24.

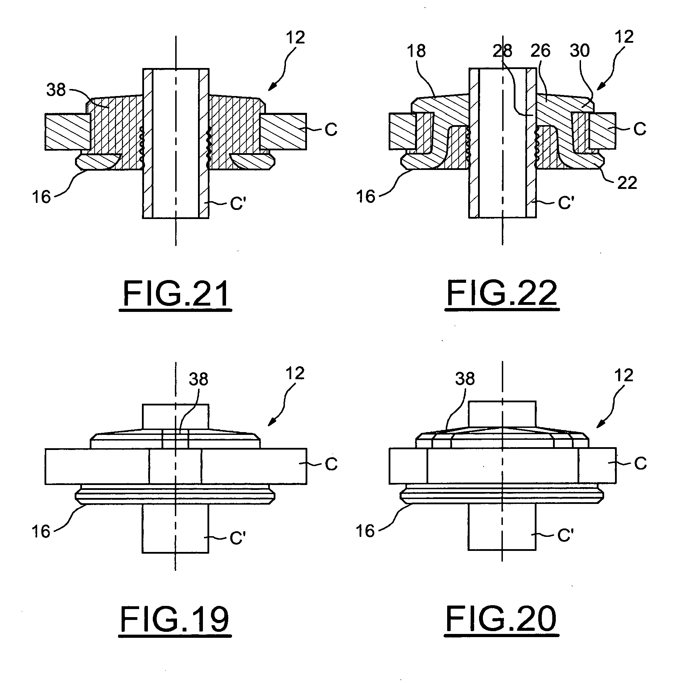

En d'autres termes, les patins d'appui sont susceptibles d'adopter une première configuration de repos, visible sur les figures 1 à 7, et une position active, adoptée après introduction de la conduite dans le passage 14, visible sur les figures 19 à 22.

Comme visible sur les figures 6 et 7, on prévoira une inclinaison des surfaces d'appui 28 de manière légèrement convergente en direction de l'extrémité distale du passage 14, selon un angle correspondant sensiblement à l'angle de déformation angulaire des secteurs de maintien lors de l'introduction de la conduite, de manière à, après introduction, obtenir des surfaces d'appui 28 parallèles à l'axe du passage 14 qui s'appliquent alors à plat contre la surface périphérique externe de la conduite.

Par ailleurs, comme visible sur les figures 1 à 4, le corps 12 comporte un matériau d'étanchéité disposé entre les secteurs de maintien 20-a, 20-b, 20-c et 20-d, à l'intérieur et à l'extérieur de l'âme 18.

En d'autres termes, entre les secteurs de maintien, le corps 12 comporte des cloisons radiales, telles que 38, élastiquement déformables.

Le corps 12 comporte encore une bague annulaire externe 40 en matériau d'étanchéité entourant les secteurs de maintien 20-a, 20-b, 20-c et 20-d.

En particulier, le matériau d'étanchéité est disposé dans la gorge 36 pour constituer une zone de montage périphérique par laquelle le corps vient se monter sur la cloison.

Intérieurement, le corps 12 comporte un manchon interne 42 en matériau d'étanchéité, bordant, intérieurement, les branches 24 des secteurs de maintien. Comme on le voit, ce manchon 42 est pourvu intérieurement d'un ensemble de nervures coaxiales, telles que 44, et délimite, conjointement avec les surfaces d'appui 28, le passage 14 pour la conduite.

Par exemple, le matériau d'étanchéité comprend du silicone.

Toutefois, tout autre matériau élastiquement déformable convenant pour l'utilisation envisagée pourrait également être utilisé à la place du silicone.

Les cloisons 38, le bandeau externe 40 et la manchon interne 42 sont venus de matière et formés simultanément au cours d'une même opération de moulage.

Ainsi, par exemple, l'âme 18, y compris les secteurs de maintien 20-a, 20-b, 20-c, 20-d ainsi que l'embase 22 peuvent être réalisés en une seule pièce par moulage d'une matière plastique rigide, le matériau d'étanchéité étant ensuite surmoulé sur l'âme 18 pour créer des cloisons 38, la bague externe 40 et le manchon interne 42.

Comme indiqué précédemment, la gorge 36 recouverte de matériau d'étanchéité est destinée à constituer une zone de montage du dispositif sur la cloison. Les patins d'appui 26 sont destinés à assurer le maintien de la conduite en position fixe prédéterminée à travers la cloison, tandis que le manchon interne 42, doté de ses nervures annulaires 44, est destiné à assurer l'étanchéité au niveau de la conduite.

Le dispositif qui vient d'être décrit s'utilise de la façon suivante.

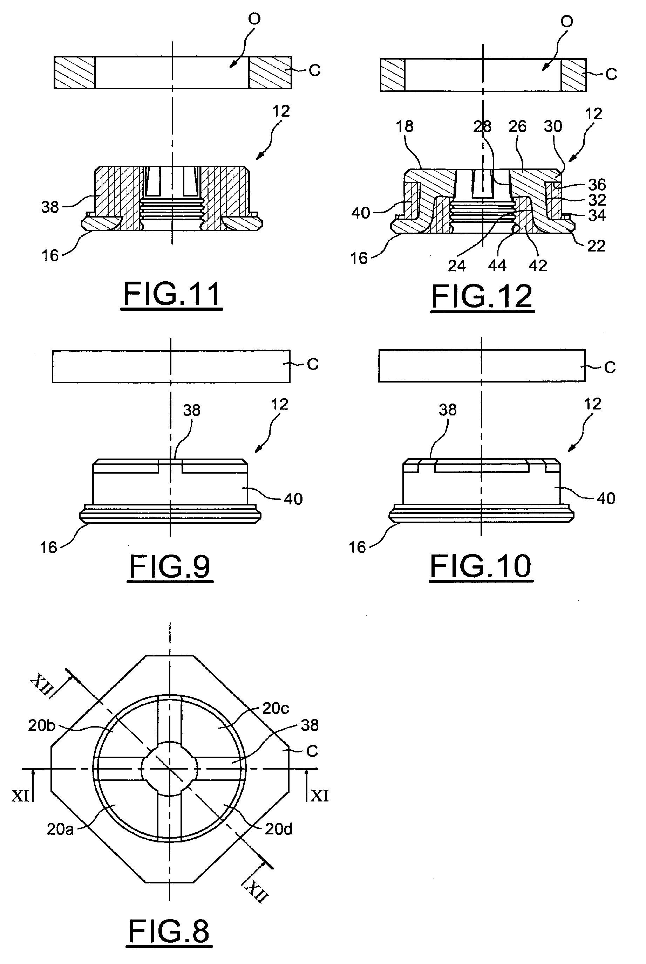

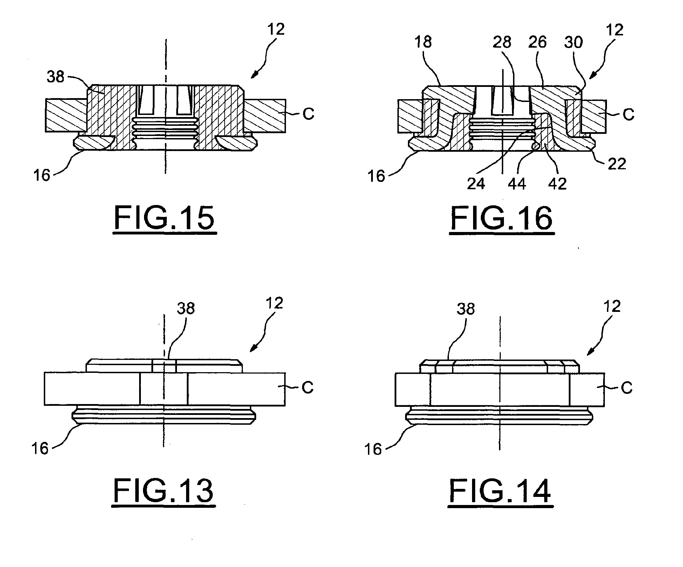

Au cours d'une première étape, visible sur les figures 9 à 16, il convient tout d'abord d'insérer le corps 12 dans l'orifice O pratiqué dans la cloison C. On prévoira à cet égard un corps dont les dimensions correspondent sensiblement à celles de l'orifice O de manière à prévoir une insertion relativement serrée du corps dans l'orifice. Dans cette position, visible sur les figures 13 à 16, le corps vient en appui par sa collerette 16 contre la cloison C avec interposition de matériau d'étanchéité. I1 fait saillie, de l'autre côté, par son extrémité distale. Dans cette position, les secteurs de maintien se situent dans la position de repos évoquée précédemment.

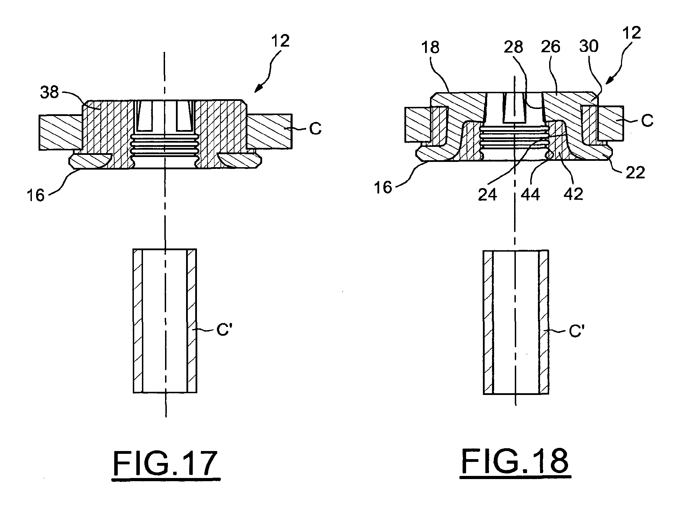

Lors de l'étape suivante, illustrée aux figures 17 à 22, il convient simplement d'insérer une conduite C' à travers le passage 14. La conduite est insérée par l'extrémité proximale du corps 12.

Au cours de l'introduction de la conduite, les secteurs de maintien sont déformés de la position de repos à la position active de sorte que les surfaces d'appui 28 reposent à plat contre la surface périphérique externe de la conduite C'.

Grâce à cette déformation radiale de l'âme, la matière d'étanchéité emplissant la gorge 36 est pressée contre le bord périphérique de l'orifice de la cloison, assurant, dans cette zone, une étanchéité parfaite.

En outre, au cours de la déformation, l'épaulement annulaire 30 des patins vient s'appliquer contre la paroi de la cloison, empêchant de la sorte tout arrachement intempestif du dispositif qui reste maintenu contre la paroi par la collerette 16 et par l'épaulement 30.

Grâce à l'agencement qui vient d'être décrit, on obtient un excellent maintien de la conduite tout en autorisant son déplacement axial et un excellent amortissement vibratoire et une excellente étanchéité, même en cas de fortes sollicitations mécaniques, grâce au maintien du dispositif sur la cloison par la collerette et par l'épaulement, par le maintien de la conduite grâce aux patins d'appuis sollicités contre la conduite par la bande de matière d'étanchéité emplissant la gorge 36, ainsi qu'une excellente étanchéité au niveau de la conduite, grâce au manchon interne 42 doté de ses nervures 44.

On notera également que le dispositif de maintien qui vient d'être décrit procure également une isolation électrique entre la conduite et la cloison traversée.

## Revendications

1. Dispositif de maintien étanche d'une conduite pour la traversée étanche d'une cloison par la conduite, comprenant un corps (12) muni d'un passage axial (14) étanche pour la conduite et d'une zone périphérique (40) de montage étanche du dispositif dans un orifice (O) pratiqué dans la cloison, le corps (12) comprenant un ensemble de secteurs rigides (20-a, 20-b, 20-c, 20-d) et un matériau d'étanchéité disposé entre les secteurs pour délimiter ledit passage étanche, et autour desdits secteurs dans ladite zone périphérique (40) du corps par laquelle il vient se monter sur la cloison, **caractérisé en ce que** le corps (12) est formé en une seule pièce par surmoulage et l'ensemble de secteurs rigides est un ensemble de secteurs rigides (20-a, 20-b, 20-c, 20-d) de maintien comportant chacun un patin d'appui (26) comprenant une surface d'appui (28) apte à reposer à plat contre la surface périphérique externe de la conduite.

2. Dispositif selon la revendication 1, **caractérisé en ce que** les secteurs (20-a, 20-b, 20-c, 20-d) sont déplaçables de manière radialement externe lors de l'insertion de la conduite à travers le passage étanche, de manière à solliciter la zone périphérique du corps contre la cloison à l'encontre d'un effort exercé par le matériau d'étanchéité sollicitant les patins (26) en appui contre la conduite.

3. Dispositif selon l'une des revendications 1 et 2, **caractérisé en ce que** le corps comprend une âme en matériau rigide, comportant une embase (22) à partir de laquelle s'étendent lesdits secteurs.

4. Dispositif selon la revendication 3, caractérisé en ce chaque secteur comprend une gorge radiale externe (36) emplie dudit matériau d'étanchéité, à l'endroit de ladite zone périphérique (40) du corps par laquelle il vient se monter sur la cloison.

5. Dispositif selon l'une quelconque des revendications 1 à 4, **caractérisé en ce que** le matériau d'étanchéité comprend un ensemble de nervures (44) coaxiales et parallèles s'étendant en saillie dans le passage étanche.

6. Dispositif selon l'une quelconque des revendications 1 à 5, **caractérisé en ce que** les patins d'appui (26) s'étendent en saillie radiale dans le passage.

7. Dispositif selon l'une quelconque des revendications 1 à 6, **caractérisé en ce qu'**il comporte quatre secteurs de maintien.

8. Dispositif selon l'une quelconque des revendications 1 à 7, **caractérisé en ce que** les secteurs rigides sont réalisés en matériau composite.

9. Dispositif selon l'une quelconque des revendications 1 à 8, **caractérisé en ce que** le matériau d'étanchéité comprend du silicone.

10. Dispositif selon l'une quelconque des revendications 1 à 9, **caractérisé en ce qu'**il constitue un moyen d'isolation électrique entre la conduite et la cloison.

11. Procédé de montage étanche d'une conduite à travers une cloison au moyen d'un dispositif de maintien étanche (10) selon l'une quelconque des revendications 1 à 10, **caractérisé en ce qu'**il comprend les étapes de :
- insertion du dispositif (10) dans un orifice (O) pratiqué dans la cloison (C) ; et
- introduction de la conduite (C') dans le passage étanche (14) du corps de manière à solliciter, d'une part, les secteurs et le matériau d'étanchéité entourant les secteurs contre la cloison et, d'autre part, solliciter les patins d'appui contre la conduite.

12. Utilisation d'un dispositif de maintien selon l'une quelconque des revendications 1 à 10, pour la traversée étanche d'une cloison d'un réservoir d'un aéronef.

## Patentansprüche

1. Dichte Haltevorrichtung für eine Leitung zur dichten Durchführung der Leitung durch eine Trennwand, einen Körper (12) aufweisend, der mit einem dichten axialen Durchgang (14) für die Leitung und einem Umfangsbereich (40) zur dichten Anbringung der Vorrichtung in einer in der Trennwand ausgebildeten Öffnung (O) ausgestattet ist, wobei der Körper (12) eine Gruppe von starren Sektoren (20-a, 20-b, 20-c, 20-d) und ein Dichtmaterial, das zwischen den Sektoren zum Begrenzen des dichten Durchgangs und um die Sektoren herum in dem Umfangsbereich (40) des Körpers, über den dieser in der Trennwand angebracht wird, angeordnet ist, **dadurch gekennzeichnet, dass** der Körper (12) durch Umspritzen aus einem Stück gefertigt ist und die Gruppe von starren Sektoren eine Gruppe von starren Haltesektoren (20-a, 20-b, 20-c, 20-d) ist, die jeweils einen Stützschuh (26) aufweisen, der eine Stützfläche (28) aufweist, die geeignet ist, flach an der Außenumfangsfläche der Leitung zur Anlage zu kommen.

2. Vorrichtung nach Anspruch 1, **dadurch gekennzeichnet, dass** die Sektoren (20-a, 20-b, 20-c, 20-d) beim Einführen der Leitung durch den dichten Durchgang radial nach außen verschiebbar sind, so dass sie den Umfangsbereich des Körpers gegen die Trennwand drücken, entgegen einer von dem Dichtmaterial ausgeübten Kraft, welche die Stützschuhe (26) in eine Position der Anlage an der Leitung drückt.

3. Vorrichtung nach einem der Ansprüche 1 und 2, **dadurch gekennzeichnet, dass** der Körper einen Kern aus starrem Material aufweist, der einen Fuß (22) aufweist, von dem aus sich die Sektoren erstrecken.

4. Vorrichtung nach Anspruch 3, **dadurch gekennzeichnet, dass** jeder Sektor an der Stelle des Umfangsbereichs (40) des Körpers, an der dieser in der Trennwand angebracht wird, eine radial äußere Auskehlung (36) aufweist, die mit dem Dichtmaterial gefüllt ist.

5. Vorrichtung nach einem der Ansprüche 1 bis 4, **dadurch gekennzeichnet, dass** das Dichtmaterial eine Gruppe von koaxialen und parallelen Rippen (44) aufweist, die sich in den dichten Durchgang vorstehend erstrecken.

6. Vorrichtung nach einem der Ansprüche 1 bis 5, **dadurch gekennzeichnet, dass** sich die Stützschuhe (26) radial vorstehend in den Durchgang erstrecken.

7. Vorrichtung nach einem der Ansprüche 1 bis 6, **dadurch gekennzeichnet, dass** sie vier Haltesektoren aufweist.

8. Vorrichtung nach einem der Ansprüche 1 bis 7, **dadurch gekennzeichnet, dass** die starren Sektoren aus Verbundwerkstoff hergestellt sind.

9. Vorrichtung nach einem der Ansprüche 1 bis 8, **dadurch gekennzeichnet, dass** das Dichtmaterial Silikon umfasst.

10. Vorrichtung nach einem der Ansprüche 1 bis 9, **dadurch gekennzeichnet, dass** sie ein Mittel zur elektrischen Isolation zwischen der Leitung und der Trennwand bildet.

11. Verfahren zur dichten Montage einer Leitung durch eine Trennwand hindurch mittels einer dichten Haltevorrichtung (10) nach einem der Ansprüche 1 bis 10, **dadurch gekennzeichnet, dass** es die folgenden Schritte aufweist:
- Einsetzen der Vorrichtung (10) in eine in der Trennwand (C) ausgebildete Öffnung (O); und
- Einführung der Leitung (C') in den dichten Durchgang (14) des Körpers, derart, dass einerseits die Sektoren und das die Sektoren umgebende Dichtmaterial gegen die Trennwand gedrückt werden und andererseits die Stützschuhe gegen die Leitung gedrückt werden.

12. Verwendung einer Haltevorrichtung nach einem der Ansprüche 1 bis 10 für die dichte Durchführung durch eine Trennwand eines Tanks eines Luftfahrzeugs.

## Claims

1. Device for the sealed retention of a pipe for the sealed penetration of the pipe through a partition wall, comprising a body (12) equipped with a sealed axial passage (14) for the pipe and with a peripheral region (40) for the sealed mounting of the device in an orifice (O) made in the partition wall, the body (12) comprising a set of rigid sectors (20-a, 20-b, 20-c, 20-d) and a sealing material positioned between the sectors to delimit the said sealed passage, and around the said sectors in the said peripheral region (40) of the body via which region it is mounted on the partition wall, **characterized in that** the body (12) is formed as a single piece by overmoulding and the set of rigid sectors is a set of rigid retaining sectors (20-a, 20-b, 20-c, 20-d) each comprising a bearing shoe (26) comprising a bearing surface (28) able to rest flat against the external peripheral surface of the pipe.

2. Device according to Claim 1, **characterized in that** the sectors (20-a, 20-b, 20-c, 20-d) can move radially outwards as the pipe is inserted through the sealed passage, so as to force the peripheral region of the body against the partition wall counter to a force exerted by the sealing material that forces the shoes (26) to bear against the pipe.

3. Device according to one of Claims 1 and 2, **characterized in that** the body comprises a core made of rigid material, comprising a base (22) from which the said sectors extend.

4. Device according to Claim 3, **characterized in that** each sector comprises an external radial groove (36) filled with the said sealing material, to that point on the said peripheral region (40) of the body via which it is mounted on the partition wall.

5. Device according to any one of Claims 1 to 4, **characterized in that** the sealing material comprises a set of coaxial and parallel ribs (44) projecting into the sealed passage.

6. Device according to any one of Claims 1 to 5, **characterized in that** the bearing shoes (26) project radially into the passage.

7. Device according to any one of Claims 1 to 6, **characterized in that** it comprises four retaining sectors.

8. Device according to any one of Claims 1 to 7, **characterized in that** the rigid sectors are made of composite.

9. Device according to any one of Claims 1 to 8, **characterized in that** the sealing material contains silicone.

10. Device according to any one of Claims 1 to 9, **characterized in that** it constitutes a means of electrical insulation between the pipe and the partition wall.

11. Method for the sealed mounting of a pipe through a partition wall using a sealed retention device (10) according to any one of Claims 1 to 10, **characterized in that** it comprises the steps of:
- inserting the device (10) in an orifice (O) made in the partition wall (C); and
- introducing the pipe (C') into the sealed passage (14) of the body in such a way as, on the one hand, to force the sectors and the sealing material surrounding the sectors against the partition wall and, on the other hand, to force the bearing shoes against the pipe.

12. Use of a retaining device according to any one of Claims 1 to 10 for the sealed penetration of a partition wall of an aircraft tank.
